# EUROPÄISCHE PATENTSCHRIFT

(11) **EP 2 823 977 B1**
(45) Veröffentlichungstag und Bekanntmachung des Hinweises auf die Patenterteilung: **09.08.2017**
(21) Anmeldenummer: 14173363.4
(22) Anmeldetag: 20.06.2014
(51) Int. Cl.: B60J 7/12, B60J 10/90

(54) **Bewegliches Faltdach für ein Kraftfahrzeug**
Folding roof for a motor vehicle
Toit repliable pour véhicule automobile

(30) Priorität: 09.07.2013 DE 102013213429
(43) Veröffentlichungstag der Anmeldung: 14.01.2015
(73) Patentinhaber: Magna Car Top Systems GmbH, 74321 Bietigheim-Bissingen (DE)
(72) Erfinder: Käsweber, Hubert, 71636 Ludwigsburg (DE)
(74) Vertreter: Rausch, Gabriele

(56) Entgegenhaltungen:
- EP-A1- 2 368 737
- EP-A2- 2 253 497
- DE-A1- 10 238 822
- DE-A1-102007 017 134
- DE-A1-102009 013 278
- DE-A1-102011 056 731

## Beschreibung

Die Erfindung bezieht sich auf ein bewegliches Dach für ein Kraftfahrzeug, vorzugsweise einen Personenkraftwagen, nach dem Oberbegriff des Patentanspruchs 1.

Es ist ein Klapp- bzw. Faltverdeck für Fahrzeuge wie Cabriolets oder dgl. aus der EP 0 509 326 A1 bekannt, das ein Verdeckgestell mit seitlichen Lenkern umfasst. Das Verdeckgestell ist in einem vorderen Bereich mit einer als Windlaufspriegel bezeichneten vorderen Dachkappe versehen. Der Windlaufspriegel verläuft quer zur Fahrzeuglängsrichtung und verbindet gegenüberliegende Lenkerelemente des Verdeckgestänges. Im Querschnitt betrachtet wird der Windlaufspriegel durch ein Hohlprofil mit einem im Querschnitt hutförmigen Unterteil und einem flächigen Oberteil gebildet. Unterteil und Deckelteil sind an vorderen und hinteren Flanschen zusammengesetzt. Ein Verdeckbezug ist um den vorderen Flansch herumgeführt und an einem freien Ende mit einer Formleiste vernäht. Die Formleiste ist zusammen mit einer Befestigungsschiene an einer Haltewand des Windlaufspriegels unter Vermittlung von Schrauben gehalten. Die Befestigungsschiene ist-in Fahrtrichtung gesehen - in einem vorderen Bereich mit einem T-förmigen Endabschnitt versehen, der in eine korrespondierende Ausnehmung eines Dichtungsprofils eingreift. Das Dichtungsprofil ist zwischen Windlaufspriegel und einem Querholm eines Windschutzscheibenrahmens angeordnet, und es umfasst zwei schlauchartige Dichtabschnitte.

Aus der DE102009013278 A1 gehen Dichtungsprofile für ein Faltverdeck eines Cabriolets hervor. Dabei ist das Dichtungsprofil ein Elastomerprofilstrang, der zwischen einem vorderen Bereich des Faltverdecks und einem Windschutzprofil vorgesehen ist. Das Dichtungsprofil ist mit einer Trägerschiene an einem Spriegelabschnitt durch u-förmige Halteabschnitte befestigt. An dem Dichtungsprofil sind zwei schlauchartige Dichtelemente angeordnet, die mit im Winkel zueinander angeordneten Wandabschnitten des Windschutzprofils zusammenarbeiten. Die Dachkappe wird dabei über ein Bauteil gebildet, über das der Stoff des Verdecks gezogen wird. Dabei werden Aluminiumguss-Bauteile oder Kunststoffspritzgussteile verwendet. Die Herstellung und die Montage einer solchen Dachkappe sind aufwendig und durch die Verwendung der großen strukturierten Dachkappen teuer.
Aus der DE 29607114 U1 ist ein bewegliches Dach bekannt, das aber nur eine konventionell aufgebaute Dachkappe aufweist.
Aus der gattungsgemäßen EP2368737A1 ist ein bewegliches Fahrzeugdach bekannt, das eine Außenschale besitzt, wobei der Umbug des Verdecks allein durch die Aussenschale bestimmt ist. Ein Halteelement ist vorhanden, reicht aber nicht bis zum Umbug des Verdeckstoffs heran.
Aus der DE102009013278A1 ist ein Fahrzeugdach bekannt, das ebenfalls eine Außenschale, aber nur einen Innenhimmel aufweist. Das Halteelement ist dabei nicht bis zum Umbug des Verdeckstoffes geführt.
Aufgabe der Erfindung ist es, ein bewegliches Dach in Gestalt eines Faltverdecks für einen Personenkraftwagen zu gestalten, wobei sich eine Dachkappe bei einfachem Aufbau und leichter Montage mit vertretbarem Einsatz an Mitteln realisieren lässt und die Verwendung von leichten Materialien ermöglicht.
Nach der Erfindung wird diese Aufgabe durch die Merkmale des Patentanspruchs 1 gelöst. Weitere, die Erfindung ausgestaltende Merkmale sind in den Unteransprüchen enthalten. Erfindungsgemäß wird die Aufgabe gelöst mit einem beweglichen Dach für ein Kraftfahrzeug, das durch ein von einer Schließstellung in eine Offenstellung und umgekehrt verstellbares und an einem Aufbau des Personenkraftwagens gelagertes Faltverdeck gebildet wird, das einen von einer vorderen Dachkappe gehaltenen Verdeckbezug aufweist, wobei an einer an der Dachkappe gehalteten Tragleiste ein Dichtkörper befestigt ist, der in der Schließstellung des beweglichen Daches an einer Wand eines oberen Querträgers eines Windschutzscheibenrahmens des Aufbaus abstützbar ist, wobei die Dachkappe aus einer Außenschale und einer Innenschale besteht, wobei ein Außenschalenabschnitt eine Abrundung aufweist, die zusammen mit einem keilförmigen, kederartigen Haltelement einen Umbug des Verdeckbezuges bestimmt. Erfindungsgemäß besteht das kederartige Halteelement aus Kunststoff, so dass es einfach und günstig herstellbar ist und in Zusammensicht mit der Abrundung des Außenschalenabschnittes eine gut definierte Kante ergibt.
Zur Befestigung der Konstruktion ist es von Vorteil, dass der Außenschalenabschnitt stellenweise eine Abwinkelung aufweist, die in eine u-förmige Aufnahmen des kederartigen Halteelements eingreift und wobei die Innenschale an der Stelle der Ausnehmung ebenfalls im Verlauf unterbrochen ist. Dadurch ist eine einfache Verspannung der Bauteile gegeneinander gewährleistet.
Vorteilhafterweise greift die Abwinkelung der Außenschale durch die Unterbrechung der Innenschale hindurch.
Dabei ist es von Vorteil, wenn Innen- und Außenschale von einem Metallblech gebildet sind.
In der Zeichnung wird ein Ausführungsbeispiel der Erfindung gezeigt, das nachstehend näher erläutert wird.
Es zeigen:

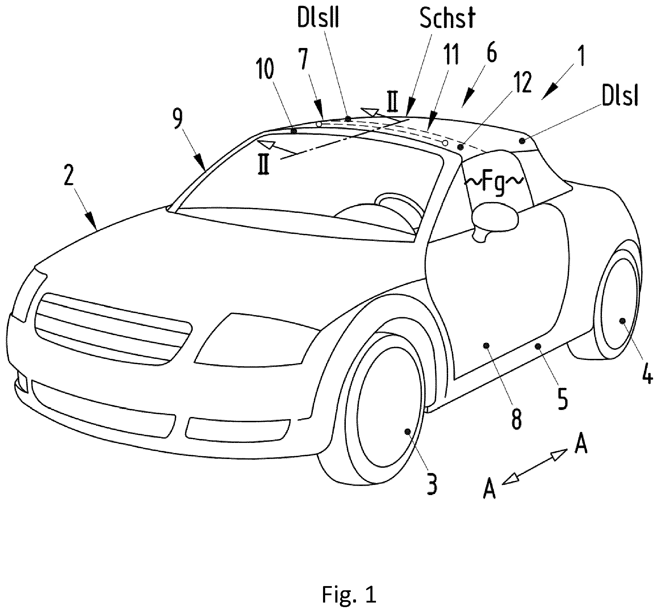

Fig. 1 eine Schrägansicht von vorne links oben auf einen Personenkraftwagen mit einem beweglichen Dach in Gestalt eines Faltverdecks,

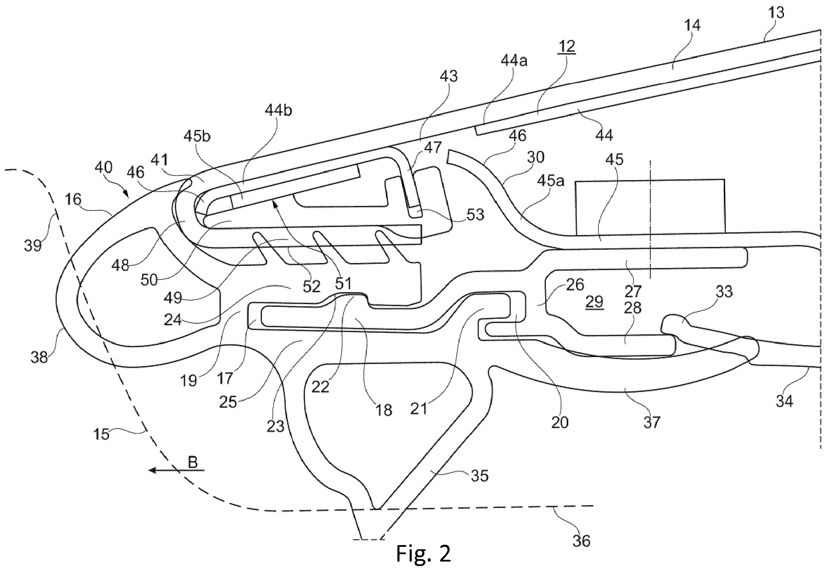

Fig. 2 einen Schnitt nach der Linie II-II der Fig. 1 in größerem Maßstab.
Fig. 3 eine Aufsicht auf den Bereich der vorderen Dachkappe
Ein Fahrzeug 1 umfasst einen Aufbau 2, der von Rädern 3 und 4 getragen wird und einen Grundkörper 5 und ein bewegliches von einer Schließstellung Schst in eine Offenstellung - nicht gezeigt- verstellbares Dach 6 umfasst, das als am Aufbau gelagertes Faltverdeck 7 ausgebildet ist. Am Grundkörper 5 gehalten sind Seitentüren 8 und ein Windschutzscheibenrahmen 9, der einen oberen Querträger 10 besitzt. Mit dem Querträger 10 verbunden ist ein vorderer Bereich 11, z.B. eine Dachkappe 12 des einen Fahrgastraum Fg in der Schließstellung Schst überspannenden Faltverdecks 7; eine Fahrzeuglängsrichtung ist mit A-A bezeichnet.

Die Dachkappe 12 des Faltverdecks 7 trägt einen Teilabschnitt 13 eines flexiblen Verdeckbezugs 14. Zwischen Dachkappe 12 und einer Wand 15 des oberen Querträgers 10 des Windschutzscheibenrahmens 9 ist ein Dichtkörper 16 wirksam, der unter Vermittlung einer Tragleiste 17 an dieser Dachkappe 12 befestigt ist. Die Tragleiste 17 ragt mit einem Haltesteg 18 in einen U-förmigen Halteabschnitt 19 des Dichtkörpers 16 hinein. Dabei nimmt eine erste in Fahrtrichtung B gesehen offene U-förmige Aufnahme 20 der Tragleiste 17 einen Profilkörpersteg 21 des Dichtkörpers 16 auf. Der Profilkörpersteg 21 verläuft entgegengesetzt zu dem Haltesteg 18 der Tragleiste 17 bzw. dem Halteabschnitt 19, dergestalt, dass Haltesteg 18 und Profilkörpersteg 21 etwa auf einer gemeinsamen Ebene liegen. Der Haltesteg 18 greift mit einer örtlichen Erweiterung 22 in eine korrespondierende Ausnehmung 23 eines oberen Schenkels 24 des U-förmigen Halteabschnitts 19 des Dichtkörpers 16 ein.

Der Haltesteg 18 und der obere Schenkel 24 und ein unterer Schenkel 25 der ersten U-förmigen Aufnahme 20 sind horizontal ausgerichtet. Von einem Steg 26 der U-förmigen Aufnahme 20 sind obere und untere Schenkel 27 und 28 einer zweiten U-förmigen Aufnahme 29 weggeführt, die entgegen der Fahrtrichtung B betrachtet offen ist, welche Schenkel 27 und 28 ebenfalls horizontal ausgerichtet sind. Der obere Schenkel 27 der zweiten U-förmigen Aufnahme 29 liegt an einem Innenschalenbereich 30, der aus Kunststoff, Leichtmetall oder dgl. bestehenden formsteifen Dachkappe 12 an. Zur Halterung des oberen Schenkels 27 und damit auch der Tragleiste 16 an der Dachkappe 12 dienen Schrauben, die in Gewindebohrungen am Innenschalenbereich 30 bzw. Dachkappe 12 hineingedreht sind. Um die Montage der Schrauben zu vereinfachen ist der untere Schenkel 28 kürzer als der obere Schenkel 27. Die Tragleiste 17 besteht aus Kunststoff oder Metall das im Strangpressverfahren verarbeitet ist, wobei die zweite U-förmige Aufnahme 29 einen Rand 33 einer dem Fahrgastraum Fg zugewandten Innenverkleidung 34 aufnimmt.

Unterhalb des Haltestegs 18 der Tragleiste 17 ist der Dichtkörper 16 mit einem ersten schlauchförmigen Dichtelement 35 versehen, das sich auf einem horizontalen Wandabschnitt 36 der Wand 15 des oberen Querträgers 10 des Windschutzscheibenrahmens 9 abstützt. Von dem ersten Dichtelement 35 aus verläuft etwa in horizontaler Richtung, d.h. entgegen der Fahrtrichtung B, eine mit besagtem Dichtelement 35 vereinigte Lippe 37, die zum einen den unteren Schenkel 28 der zweiten U-förmigen Aufnahme 29 und zum anderen den Rand 33 der Innenverkleidung 34 abdeckt.

In Fahrtrichtung B gesehen ist vor der Tragleiste 17 bzw. dem Haltesteg 1 am Dichtkörper 16 ein zweites schlauchförmiges Dichtelement 38 angeformt, das mit einem zwar schrägen, jedoch aufrechten Wandabschnitt 39 der Wand 15 des Querträgers 10 des Windschutzscheibenrahmens kraftschlüssig zusammenarbeitet. Dabei ist das zweite Dichtelement 38 mit einem oberen Endabschnitt 40 an einen gerundeten Bereich 41 des die Dachkappenstruktur umschließenden Verdeckbezugs 13 angeschlossen.

Die Dachkappe 12 besteht aus einer Außenschale 44 und einer Innenschale 45. Die Außenschale 44 weist einen ersten Bereich 44 a und einen zweiten Außenschalenbereich 44 b auf, die durch eine Ausnehmung 43 im Längsverlauf unterbrochen sind. Die Innenschale 45 zeigt einen horizontalen Wandbereich 45a, der zum Verdeck hin eine Krümmung 46 aufweist und einen Innenschalenabschnitt 45 b, der an sich an den zweiten Außenschalenbereich 44 b anschließt. Dieser Außenschalenabschnitt 44b weist an seiner in Fahrtrichtung vorgesehenen Spitze eine Abrundung 46 in Form eines Viertelkreises auf. In weiteren Verlauf des Außenschalenabschnitts 44b liegt der plattenartige Innenschalenabschnitt 45 b an, der die Ausnehmung 43 zum Durchtritt einer Abwinkelung 47 des Außenschalenabschnitts 44b aufweist.

Der Stoff des Verdecks ist um die Abrundung 46 des Außenschalenabschnitts 44b als Umbug 48 herumgeführt und mündet in einen horizontalen Umbugflansch 49. Der horizontalen Umbugflansch 49 erstreckt sich entgegen der Fahrtrichtung B in etwa bis zur Abwinkelung 47 des Außenschalenabschnitts 44b.
Der Außenschalenabschnitts 44b und der Innenschalenabschnitt 45b und der Umbugflansch 49 verlaufen in einem spitzen Winkel zueinander, wobei der Raum zwischen Innenschalenabschnitt 45b und Umbugflansch 49 durch ein kederartiges Haltelement 50 ausgefüllt ist. Das kederartige Halteelement 50 liegt mit einer schiefen Ebene 51 am Innenschalenabschnitt 45b und mit seiner horizontalen Ebene 52 an der Innenseite des Umbugflansches 49 an. Der Umbugflansch 49 und die horizontale Ebene 52 des kederartigen Halteelements sind durch Nähen, Schweißen oder vergleichbaren Verbindungsverfahren miteinander verbunden.
Das kederartige Halteelement 50 besteht vorzugsweise aus Kunststoff und zeigt eine u-förmige Aufnahmen 53, in die die Abwinkelung 47 des Außenschalenabschnitts 44b eingreift.

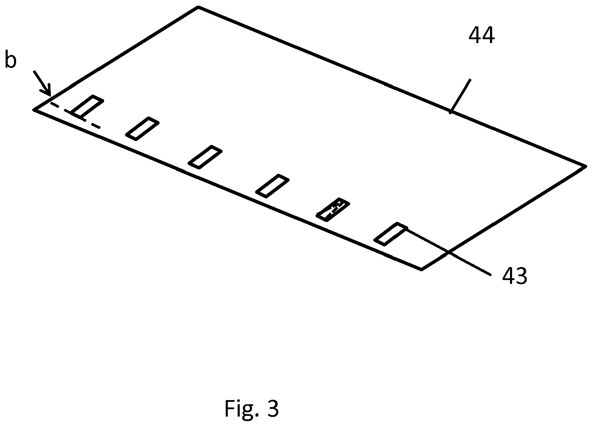

In Figur 3 wird eine Ausführungsform der Anordnung der Ausnehmungen 43 gezeigt. Die Außenschale 44 weist in diesem Beispiel 6 Ausnehmungen auf, die im regelmäßigen Abstand zueinander angeordnet sind.
Das Material der Ausnehmungen 23 ist nach innen abgebogen, was in der Zeichnung nicht sichtbar ist. In einer vorteilhaften Gestaltung hat die Abwinkelung 47 die Form der Ausnehmung, also in diesem Beispiel eine rechteckige Form, die entlang der Biegeachse b nach innen gebogen wird. Die Kante entlang der Achse b bleibt ungeschnitten oder gestanzt, die drei weiteren Seiten des Rechtecks werden ausgeschnitten. Es ist aber auch möglich die Außenschale so vorzustanzen, dass die Abwinkelung nach dem Biegen eine andere Form, eventuell eine spitz zulaufende verjüngte Form aufweist. Diese Form ist in einem der Ausnehmungen 23 gestrichelt eingezeichnet, sie verjüngt sich von der Biegeachse b aus gesehen nach vorne zu einer Spitze oder einer Zunge hin.

Die Ausgestaltung des beweglichen Daches mit einer Konstruktion aus Metallblechschalen und einem Kunststoff-Halteelement ist im Vergleich zum Stand der Technik leicht und durch die erfindungsgemäße Lösung auch leicht zu montieren.

**Legende**

| | | | |
|---|---|---|---|
| 1 | Fahrzeug | 26 | Steg Aufnahme |
| 2 | Aufbau | 27,28 | Schenkel zweite Aufnahmen |
| 3, | 4 Räder | 29 | zweite Aufnahmen |
| 5 | Grundkörper | 30 | Innenschalenbereich |
| 6 | verstellbares Dach | 33 | Rand |
| 7 | Faltverdeck | 34 | Innenverkleidung |
| 8 | Seitentüren | 35 | Dichtelement |
| 9 | Windschutzscheibenrahmen | 36 | Wandabschnitt |
| 10 | oberer Querträger | 37 | Lippe |
| 11 | vorderer Bereich | 38 | schlauchförmiges Dichtelement |
| 12 | Dachkappe | 40 | Endabschnitt |
| 13 | Teilabschnitt | 41 | gerundeter Bereich |
| 14 | Verdeckbezug | 43 | Ausnehmung |
| 15 | Wand des Querträgers | 44 | Außenschale |
| 16 | Dichtkörper | 45 | Innenschale |
| 17 | Tragleiste | 46 | Abrundung |
| 18 | Haltesteg | 47 | Abwinkelung |
| 19 | Halteabschnitt | 48 | Umbug |
| 20 | Aufnahmen | 49 | Umbugflansch |
| 21 | Profilkörpersteg | 50 | kederartiges Halteelement |
| 22 | Erweiterung Haltesteg | 51 | schiefe Ebene des Halteelements |
| 23 | Ausnehmung | 52 | horizontale Ebene des Halteelements |
| 24 | Schenkel Halteabschnitt | 53 | Aufnahme Haltelement |
| 25 | unterer Schenkel Aufnahme | | |

## Patentansprüche

1. Bewegliches Dach für ein Kraftfahrzeug, das durch ein von einer Schließstellung in eine Offenstellung und vice versa verstellbares und an einem Aufbau des Personenkraftwagens lagerbares Faltverdeck gebildet wird, das einen von einer vorderen Dachkappe (12) gehaltenen Verdeckbezug (14) aufweist, wobei an einer an der Dachkappe (12) gehalteten Tragleiste (18) ein Dichtkörper (16) befestigt ist, der in der Schließstellung des beweglichen Daches an einer Wand (15) eines oberen Querträgers eines Windschutzscheibenrahmens des Aufbaus abstützbar ist, **dadurch gekennzeichnet, dass** die Dachkappe (12) aus einer Außenschale (44) und einer Innenschale (45) besteht, wobei ein Außenschalenabschnitt (44b) eine Abrundung (46) aufweist, die zusammen mit einem keilförmigen, kederartigen Haltelement (50) einen Umbug (48) des Verdeckbezuges (14) bestimmt das kederartige Halteelement (50) aus Kunststoff besteht., so dass sich in Zusammensicht mit der Abrundung des Außenschalenabschnittes eine gut definierte Kante ergibt.

2. Bewegliches Dach nach Anspruch 1, **dadurch gekennzeichnet, dass** der Außenschalenabschnitt (44b) stellenweise eine Abwinkelung (47) aufweist, die in eine u-förmige Aufnahmen (53) des kederartigen Halteelements eingreift.

3. Bewegliches Dach nach den Ansprüchen 1 oder 2 , **dadurch gekennzeichnet, dass** die Innenschale (45) an der Stelle der Ausnehmung (43) ebenfalls im Verlauf unterbrochen ist.

4. Bewegliches Dach nach Anspruch 3, **dadurch gekennzeichnet, dass** die Abwinkelung (47) der Außenschale (44) durch die Unterbrechung der Innenschale (45) durchgreift.

5. Bewegliches Dach nach Anspruch 1, **dadurch gekennzeichnet, dass** Außen- und/oder Innenschale (44, 45) aus dünnem Metallblech gebildet sind.

## Claims

1. Folding roof for a motor vehicle, which is formed by a folding top which is adjustable from a closed position into an open position and vice versa, can be mounted on a body of the passenger vehicle and has a folding-top cover (14) held by a front roof cap (12), wherein a sealing body (16) is fastened to a supporting strip (18) held on the roof cap (12), said sealing body being supportable on a wall (15) of an upper crossmember of a windscreen frame of the body in the closed position of the movable roof, **characterized in that** the roof cap (12) consists of an outer shell (44) and an inner shell (45), wherein an outer shell portion (44b) has a rounding (46) which, together with a wedge-shaped, weatherstrip-like holding element (50), determines a bend (48) in the folding-top cover (14), and the weatherstrip-like holding element (50) is composed of plastic, and therefore awell defined edge arises in an overall view with the rounding of the outer shell portion.

2. Folding roof according to Claim 1, **characterized in that** the outer shell portion (44b) in places has an angled portion (47) which engages in a U-shaped receptacle (53) of the weatherstrip-like holding element.

3. Folding roof according to Claim 1 or 2, **characterized in that** the inner shell (45) likewise has an interrupted profile at the location of the recess (43).

4. Folding roof according to Claim 3, **characterized in that** the angled portion (47) of the outer shell (44) reaches through the interruption of the inner shell (45).

5. Folding roof according to Claim 1, **characterized in that** outer and/or inner shells (44, 45) are formed from a thin metal sheet.

## Revendications

1. Toit repliable pour un véhicule automobile, qui est formé par un recouvrement pliant pouvant être déplacé d'une position de fermeture dans une position d'ouverture et vice versa et qui peut être supporté sur une carrosserie du véhicule de tourisme, lequel présente une toile de recouvrement (14) retenue par un recouvrement de toit avant (12), un corps d'étanchéité (16) étant fixé au niveau d'une baguette de support (18) fixée au recouvrement de toit (12), laquelle peut être supportée dans la position de fermeture du toit repliable sur une paroi (15) d'une traverse supérieure d'un cadre de pare-brise de la carrosserie, **caractérisé en ce que** le recouvrement de toit (12) se compose d'une coque extérieure (44) et d'une coque intérieure (45), une portion de coque extérieure (44b) présentant une partie arrondie (46) qui définit, conjointement avec un élément de retenue (50) cunéiforme, de type bourrelet, une partie cintrée (48) de la toile de capote (14), l'élément de retenue de type bourrelet (50) se composant de plastique de sorte que l'on obtienne une arête bien définie en association avec la partie arrondie de la portion de coque extérieure.

2. Toit repliable selon la revendication 1, **caractérisé en ce que** la portion de coque extérieure (44b) présente localement un coude (47) qui s'engage dans un logement en forme de U (53) de l'élément de retenue de type bourrelet.

3. Toit repliable selon les revendications 1 ou 2, **caractérisé en ce que** la coque intérieure (45) est également interrompue dans son étendue à l'endroit de l'évidement (43).

4. Toit repliable selon la revendication 3, **caractérisé en ce que** le coude (47) de la coque extérieure (44) vient en prise à travers l'orifice de la coque intérieure (45).

5. Toit repliable selon la revendication 1, **caractérisé en ce que** la coque extérieure et/ou la coque intérieure (44, 45) sont formées de tôle métallique mince.
